# EUROPÄISCHE PATENTANMELDUNG

(11) **EP 3 654 454 A1**
(43) Veröffentlichungstag der Anmeldung: **20.05.2020**
(21) Anmeldenummer: 18206844.5
(22) Anmeldetag: 16.11.2018
(51) Int. Cl.: H01R 4/26, H01R 13/04, H01R 13/10

(54) **ANORDNUNG ZUR ELEKTRISCHEN VERBINDUNG ZWEIER BAUTEILE**

(71) Anmelder: BorgWarner, Inc., Auburn Hills, MI 48326-2872 (US)
(72) Erfinder: Glaß, Thomas, 67806 Rockenhausen (DE); Homann, Kai, 55128 Mainz (DE)
(74) Vertreter: Baur & Weber Patentanwälte PartG mbB

(57) **Zusammenfassung**

Es wird eine Anordnung (2) zur elektrischen Verbindung zweier Bauteile, insbesondere einer Leistungselektronikschaltung (58) mit einem Elektromotor (56) einer Aufladevorrichtung (48), beschrieben, wobei ein erstes Bauteil (24) ein entlang einer Längsachse (6) ausgebildetes erstes Kontaktelement (4) aus einem leitfähigen Material aufweist, das mit einer die Längsachse (6) wenigstens teilweise umschließenden Außenfläche (8) ausgeführt ist, und ein zweites Bauteil (30) ein zweites Kontaktelement (14) aus einem leitfähigen Material aufweist, das mit einen entlang der Längsachse (6) ausgebildeten Hohlraum (18) ausgeführt ist, dessen Innenfläche (20) mit der Außenfläche (8) des ersten Kontaktelements (4) korrespondiert, wobei entweder die Innenfläche (20) des zweiten Kontaktelements (14) oder die Außenfläche (8) des ersten Kontaktelements (4) mit einer Profilierung (22) versehen ist, die eine Vielzahl vorspringender Elemente aufweist, wobei die Innenfläche (20) und die Außenfläche (8) bezüglich ihrer lateralen Abmessungen so gewählt sind, dass die vorspringenden Elemente der Profilierung (22) bei Einführen des ersten Kontaktelements (4) in das zweite Kontaktelement (14) in einem oberflächennahen Bereich in diesen eindringen.

## Beschreibung

Die Erfindung betrifft eine Anordnung zur elektrischen Verbindung zweier Bauteile, einer Leistungselektronikschaltung mit einem Elektromotor einer Aufladevorrichtung.

Aus dem allgemeinen Stand der Technik sind Aufladevorrichtungen in Form von Abgasturboladern bekannt, bei denen ein Turbinenrad ein Verdichterrad eines Verdichters antreibt. Turbinenrad und Verdichterrad sind auf einem gemeinsamen Rotor angeordnet, der in einem Lagergehäuse drehbar geführt ist. Das Turbinenrad wird von einem Abgasstrom angetrieben. Der Verdichter ist im Ansaugtrakt einer Brennkraftmaschine angeordnet.

Desweiteren sind Aufladevorrichtungen bekannt, bei denen der Antrieb des Verdichterrads nicht mittels des Turbinenrads sondern mittels eines Elektromotors erfolgt.

Eine derartige Vorrichtung ist beispielsweise aus der EP 2 952 758 A2 bekannt. Die darin beschriebene Aufladevorrichtung für eine Brennkraftmaschine, insbesondere für ein Fahrzeug, umfasst einen Verdichter mit einem Verdichtergehäuse und ein in einem Verdichterraum angeordnetes Verdichterrad, einen Elektromotor mit einem Rotor und einem Stator, ein Motorgehäuse mit einem Motorraum zur Aufnahme des Rotors und des Stators und eine Verbindung von dem Verdichterraum in den Motorraum, um einen Druckausgleich zwischen dem Verdichterraum und dem Motorraum zu ermöglichen.

Außerdem sind Aufladevorrichtungen bekannt, bei denen ein mechanischer Turbolader mit Turbinenrad und Verdichterrad von einem weiteren mittels eines Elektromotors angetriebenen Verdichterrad ergänzt wird.

Des Weiteren werden auch bei Brennstoffzellen Aufladevorrichtungen für eine Fluidversorgung, d.h. zur Luftzuführung, der Brennstoffzelle eingesetzt.

Bei diesen Ausführungen müssen oftmals auch elektrische Baugruppen mit der Aufladevorrichtung verbunden werden, deren Montage auch bei beengten Platzverhältnissen möglich sein soll.

Zur Gewindeverbindung zwischen Rohrteilen ist in der EP 0 484 392 B1 angegeben, ein axial kegeliges Außen- und Innengewinde der beiden Teile mit regelmäßigen Gängen zu versehen, wobei die Gewinde der beiden Teile mit einem Presssitz zwischen ihnen innerhalb eines Auslaufs des Außengewindes gepaart sind. Eine Fluidabdichtung der Gewindeverbindung beinhaltet einen Eingriff des Ansatzabschnitts des Außengewindeteils innerhalb des Innengewindeteils. Das Außengewinde erstreckt sich in den Ansatzabschnitt, wobei ein fluidabdichtender Eingriff des Außen- und Innengewindes vorliegt, der einen Presssitz zwischen dem Außen- und Innengewinde in dem Ansatzabschnitt in einem Maß beinhaltet, das ausreicht, im wesentlichen die Abdichtung gegen Fluidaustritt an dem Ansatzabschnitt auch dann beizubehalten, wenn die Verbindung innen oder gegebenenfalls außen Fluiddruck ausgesetzt ist, und dass der Presssitz zwischen dem Außen- und Innengewinde an dem Auslauf des Außengewindes ausreicht, im wesentlichen einen Gewindeeingriff an dem Auslauf beizubehalten, während die Verbindung dem vorgenannten Fluiddruck sowie Axialzug entsprechend der Axialfließgrenze des Rohrkörpers ausgesetzt ist.

Aus der WO 93/13908 A1 ist ein Verfahren zum Sichern gegen seitliche Bewegung zweier Körper bekannt, die in einem stirnseitigen Kontakt gehalten werden, um dadurch eine Verbindung zwischen den beiden Körpern herzustellen. Das Verfahren beinhaltet eine seitliche Relativbewegung der beiden Oberflächen, um das "Aufreiben" zwischen ihnen zu fördern, wobei dieses Aufreiben die Oberflächen gegen weitere derartige Bewegungen bindet und während und/oder nach der Bildung einer aufgeklebten Verbindung ein elektrischer Strom über die Verbindung geleitet wird. Wird der Strom während des Bildens der Verbindung bereitgestellt, so wird die zugeführte externe mechanische Energie durch die elektrische Energie ergänzt, um die berührenden Unebenheiten selektiv zu erwärmen und aufzuweichen, so dass diese sich schneller verformen und abflachen können, um andere kleinere Unebenheiten in der Nähe in Kontakt zu bringen und so die Anzahl der Aufreibstellen zu erhöhen. Zwischen die Verbindungsflächen kann bei der Bilden der Verbindung eine reibfördernde Substanz eingebracht werden.

Ausgehend von diesem Stand der Technik ist es nun Aufgabe der Erfindung, eine Anordnung zur elektrischen Verbindung zweier Bauteile zu schaffen, mittels diesem eine einfache Montage von elektronischen Baugruppen an oder in einer Aufladevorrichtung für eine Brennkraftmaschine oder für eine Brennstoffzelle möglich ist.

Diese Aufgabe wird durch den unabhängigen Patentanspruch 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Anordnung zur elektrischen Verbindung zweier Bauteile, insbesondere einer Leistungselektronikschaltung mit einem Elektromotor einer Aufladevorrichtung geschaffen, wobei ein erstes Bauteil ein entlang einer Längsachse ausgebildetes erstes Kontaktelement aufweist, das mit einer die Längsachse wenigstens teilweise umschließenden Außenfläche ausgeführt ist, und ein zweites Bauteil ein zweites Kontaktelement aufweist, das mit einen entlang der Längsachse ausgebildeten Hohlraum ausgeführt ist, dessen Innenfläche mit der Außenfläche des ersten Kontaktelements korrespondiert, wobei entweder die Innenfläche des zweiten Kontaktelements oder die Außenfläche des ersten Kontaktelements mit einer Profilierung versehen ist, die eine Vielzahl vorspringender Elemente aufweist, wobei die Innenfläche und die Außenfläche bezüglich ihrer lateralen Abmessungen so gewählt sind, dass die vorspringenden Elemente der Profilierung bei Einführen des ersten Kontaktelements in das zweite Kontaktelement in einem oberflächennahen Bereich in diesen eindringen.

Demnach weist die Anordnung zwei Kontaktelemente auf, bei denen eine Profilierung auf einem der beiden Kontaktelemente für ein Eindringen in einen oberflächennahen Bereich sorgt. Dieses Eindringen erzeugt eine Vielzahl von lokalen elektrischen Kontakten, so dass eine elektrische Verbindung mittels der Anordnung zur Übertragung größerer Ströme geeignet ist. Zum Zusammensetzen müssen daher lediglich die beiden Kontaktelemente bezüglich ihrer korrespondierend ausgestalteten Oberflächen zueinander geführt werden, so dass auch eine mechanisch stabile Verbindung hergestellt wird, die aufgrund der Verschiebung entlang der Längsachse zueinander auch dann vorgenommen werden kann, wenn beispielsweise durch einen Monteur kein unmittelbarer Sichtkontakt bei der Montage besteht. Das Einführen der beiden Bauteile bezüglich ihrer Innen- bzw. Außenflächen kann daher blind erfolgen, wobei die korrespondierenden Flächen auch so geformt sein können, dass eine selbstjustierende Montage möglich ist. Dazu könnte beispielsweise die Außenfläche an ihrem der Innenfläche zugewandten Ende beispielsweise abgeschrägt sein. Vorteilhafterweise ist die Profilierung an der Außenfläche des ersten Kontaktelements angeordnet, so dass diese beispielsweise in Form einer regelmäßigen Verzahnung mittels eines Kaltwalzverfahrens erzeugt werden kann, nachdem das erste Kontaktelement hergestellt wurde.

Das erste Kontaktelement und das zweite Kontaktelement werden aus einem elektrisch leitfähigen Material gebildet, wobei hier typischerweise ein metallischer Werkstoff in Frage kommt. Mittels der Profilierung kann ein Eindringen beispielsweise in eine sich gegebenenfalls an der Oberfläche des Metalls ausbildende Oxidschicht innerhalb des oberflächennahen Bereichs erfolgen. Beim Zusammenfügen der Bauteile wird daher eine zuverlässige elektrische Verbindung geschaffen.

Das erste Kontaktelement und das zweite Kontaktelement werden vorzugsweise mit einem entlang der Längsachse symmetrischen Querschnitt, insbesondere einem zylindrischen oder rechteckförmigen Querschnitt gebildet. Insbesondere bei einem zylindrischen Querschnitt ist es möglich, das erste Kontaktelement und das zweite Kontaktelement als einfach herzustellende Drehteile auszuführen.

Gemäß einer weiteren Ausführungsform der Erfindung ist zusätzlich ein Führungsstift an einer Spitze des ersten Kontaktelements oder des zweiten Kontaktelements vorgesehen, um das Einführen der Kontaktelemente zu erleichtern, indem der Führungsstift in eine korrespondierende Führungsöffnung am anderen Kontaktelement eingreift.

Diese Vorgehensweise erleichtert die Montage der Anordnung in nur schwer zugänglichen Bereichen, so dass mittels des Führungsstifts eine Justage der beiden Kontaktelemente zueinander vorgenommen werden kann.

Desweiteren ist es insbesondere vorgesehen, sowohl im ersten Bauteil als auch im zweiten Bauteil die Kontaktelemente in einem Isolator anzuordnen, der die stromfließenden Kontaktelemente von übrigen Bestandteilen der Bauteile trennen kann. Der Isolator kann dabei eine Außenfläche der Bauteile bilden.

Desweiteren kann es vorgesehen sein, sowohl im ersten als auch im zweiten Bauteil mehrere Kontaktelemente vorzusehen.

Demnach ist es möglich, mehrere elektrische Verbindungen mittels der erfindungsgemäßen Anordnung zu schaffen.

Des Weiteren wird eine Aufladevorrichtung für eine Brennkraftmaschine oder eine Brennstoffzelle, insbesondere in einem Fahrzeug, angegeben, wobei die Aufladevorrichtung einen Verdichter mit einem Verdichtergehäuse und einem Verdichterraum, in dem ein Verdichterrad angeordnet ist, einen Elektromotor mit einem Motorgehäuse, und eine Leistungselektronikschaltung zur Ansteuerung des Elektromotors aufweist, die in einem Aufnahmeraum benachbart zum Motorgehäuse angeordnet ist, wobei zur elektrischen Verbindung an der Leistungselektronikschaltung und/oder am Elektromotor eine Anordnung wie oben beschrieben vorgesehen ist.

Dabei kann die Anordnung zur elektrischen Verbindung innerhalb der Leistungselektronikschaltung vorgesehen sein.

Alternativ oder zusätzlich kann die Anordnung zur elektrischen Verbindung zwischen der Leistungselektronikschaltung und dem Elektromotor vorgesehen sein.

Nachfolgend werden einige Ausführungsbeispiele anhand der Zeichnung näher erläutert. Es zeigen:
- Fig. 1A: ein erstes Kontaktelement zusammen mit einem zweiten Kontaktelement als Bestandteile einer ersten erfindungsgemäßen Anordnung in einer perspektivischen Seitenansicht,
- Fig. 1B: ein erstes Kontaktelement zusammen mit einem zweiten Kontaktelement als Bestandteile einer weiteren erfindungsgemäßen Anordnung in einer perspektivischen Seitenansicht,
- Fig. 2: ein erstes Kontaktelement zusammen mit einem zweiten Kontaktelement als Bestandteile einer weiteren erfindungsgemäßen Anordnung in einer perspektivischen Seitenansicht,
- Fig. 3: eine erfindungsgemäße Anordnung in einer Schnittansicht gemäß einer ersten Ausführungsform,
- Fig. 4: eine erfindungsgemäße Anordnung in einer Schnittansicht gemäß einer zweiten Ausführungsform,
- Fig. 5: in einer Explosionsdarstellung die Anordnung aus Fig. 4 zur Erläuterung des Zusammenbaus, und
- Fig. 6: schematisch eine erfindungsgemäße Anordnung zusammen mit einer Aufladevorrichtung in einer Schnittansicht.

In den Figuren sind gleiche oder funktional gleich wirkende Bauteile mit den gleichen Bezugszeichen versehen.

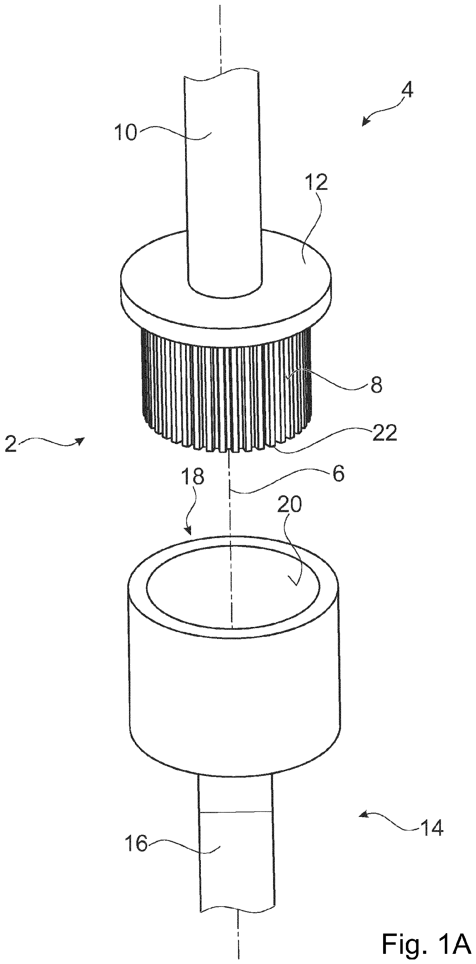

Unter Bezugnahme auf Fig. 1A wird nachfolgend eine erste Ausführungsform einer erfindungsgemäßen Anordnung 2 zur elektrischen Verbindung zweier Bauteile näher erläutert. Die Anordnung 2 umfasst ein erstes Kontaktelement 4, das im Wesentlichen rotationssymmetrisch um eine Längsachse 6 ausgebildet ist. Das erste Kontaktelement 4 weist im gezeigten Beispiel eine zylinderförmige Außenfläche 8 auf, die zu einem ersten Anschluss 10 hin von einem ringförmigen Kragen 12 begrenzt wird. Anstelle eines vollständig umlaufenden ringförmigen Kragens kann auch eine Ausgestaltung gewählt werden, bei der mehrere Kreissegmente gebildet sind oder bei der einzelne radiale Vorsprünge vorgesehen sind.

Ein zweites Kontaktelement 14 ist ebenfalls entlang der Längsachse 6 im Wesentlichen rotationssymmetrisch ausgebildet, wobei an einem gegenüberliegendem Ende eines zweiten Anschluss 16 ein zylindrischer Hohlraum 18 gebildet ist, der um die Längsachse herum von einer Innenfläche 20 begrenzt wird. Über den ringförmigen Kragen 12 wird ein Anschlag beim Zusammenführen von erstem Kontaktelement 4 und zweiten Kontaktelement 14 geschaffen.

Der erste Anschluss 10 und der zweite Anschluss 16 sind in der Ausführung gemäß Fig. 1A als elektrische Leiter ausgebildet. Eventuell zusätzlich vorhandene Ösen, Buchsen, Anschlussfähnchen oder dergleichen sind dem Fachmann bekannt und würden nach Bedarf entsprechend vorgesehen werden.

Die Dimensionierung der Innenfläche 20 und die Dimensionierung der Außenfläche 8 sind dabei so gewählt, dass das erste Kontaktelement 4 und das zweite Kontaktelement 14 bezüglich der korrespondierenden Außenfläche 8 und der Innenfläche 20 ineinandergreifen können, so dass eine elektrische Verbindung zwischen dem ersten Anschluss 10 und dem zweiten Anschluss 16 hergestellt werden kann.

In Fig. 1A ist das erste Kontaktelement 4 und das zweite Kontaktelement 14 mit runden Querschnitten gebildet, wobei in anderen Ausführungsformen beispielsweise auch ein quadratischer, rechteckiger oder anders geformter Querschnitt in Frage kommt.

Eine Besonderheit der Anordnung 2 besteht darin, dass entweder die Innenfläche 20 des zweiten Kontaktelements 14 oder die Außenfläche 8 des ersten Kontaktelements 4 mit einer Profilierung 22 versehen ist, die in Fig. 1A durch eine Vielzahl von entlang der Längsachse 6 ausgebildeten Rillen angedeutet ist.

Bevorzugt ist es, eine Ausführungsform zu wählen, bei der die Profilierung 22 lediglich auf der Außenfläche 8 des ersten Kontaktelements 4 ausgebildet ist, wie dies in Fig. 1A gezeigt ist.

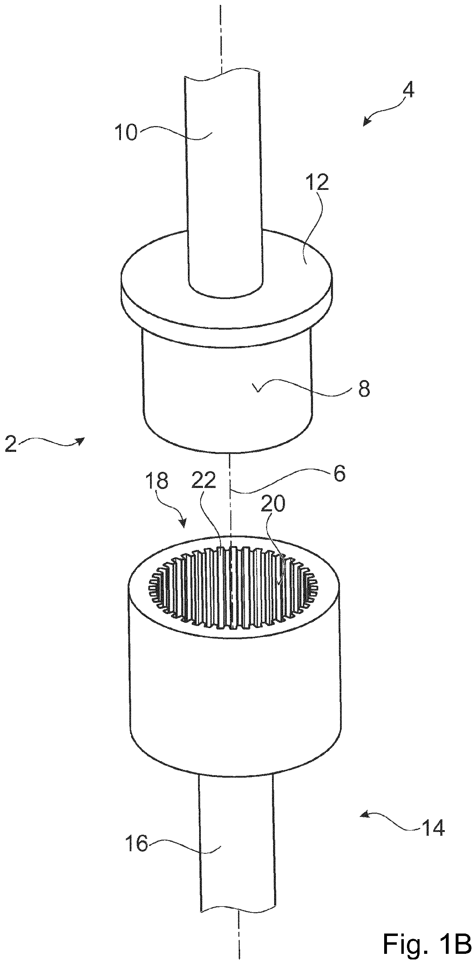

Eine Variante, bei der die Profilierung 22 auf der Innenfläche 20 des zweiten Kontaktelements 14 ausgebildet ist, ist in Fig. 1B gezeigt.

Die Profilierung 22 gemäß Fig. 1A oder 1B ist so ausgestaltet, dass das erste Kontaktelement 4 auf der Außenfläche 8 mit einer Vielzahl von vorspringenden Elementen versehen ist, die beispielsweise mittels eines Kaltwalzverfahrens erzeugt wurden. Die Profilierung 22 ist demgemäß als regelmäßige Verzahnung ausgebildet, wobei die Höhe der radial vorspringenden Elemente so gewählt ist, dass beim Einführen des ersten Kontaktelements 4 in das zweite Kontaktelement 14 die vorspringenden Elemente der Profilierung 22 in einen oberflächennahen Bereich in diesen eindringen. Hierbei kann es sich z. B. um eine Oxidschicht auf der metallischen Innenfläche 20 des zweiten Kontaktelements 14 handeln, wobei die Höhe der vorspringenden Elemente beim Einführen zu einem lokalen Verschweißen auf der Innenfläche 20 und der Außenfläche 8 führt. Beim Lösen des ersten Kontaktelements 4 vom zweiten Kontaktelement 14würde das lokale Verschweißen durch losreißen aufgetrennt werden.

Eine derartige Vorgehensweise wird in der Technik dem englischen Sprachgebrauch folgend oftmals auch als "galling" bezeichnet oder mit dem deutschen Wort "Kaltverschweißen" beschrieben.

Auf diese Weise ist es möglich, eine kosteneffiziente elektrische Verbindung zu schaffen, die darüber hinaus auch einen hohen Stromfluß erlaubt. Desweiteren ist eine derartige Anordnung 2 mit nur geringen Anforderungen bezüglich der einzuhaltenden Bauteiltoleranzen versehen und stellt neben einer elektrischen Verbindung auch eine mechanische Verbindung dar, die über eine gute Stabilität bei Vibrationen verfügt, was insbesondere in der Fahrzeugtechnik beim Einsatz an Motoren wichtig ist. Im Gegensatz zu gelegentlich filigranen Steckerbuchsenaufbauten ist hier auch die Gefahr einer Zerstörung der elektrischen Verbindung beim Zusammenbau gering, so dass die mit der Anordnung 2 versehenen Bauteile auch ohne Sichtkontakt durch einen Benutzer zusammengeführt werden können, so dass eine einfache Montage zweier Bauteile möglich wird.

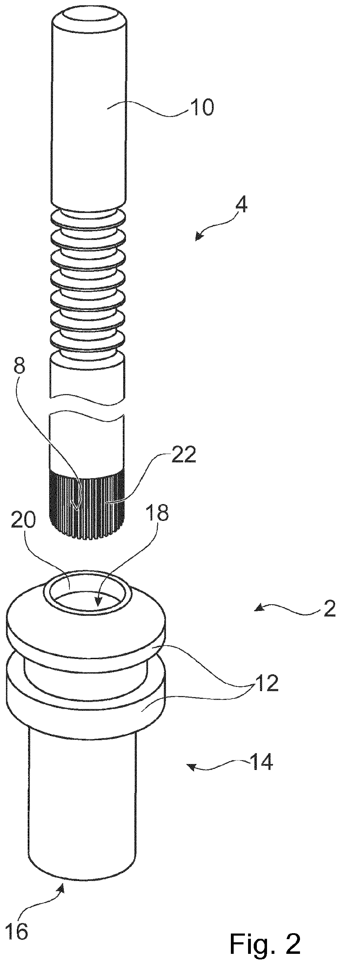

In Fig. 2 ist eine weitere Ausführungsform der erfindungsgemäßen Anordnung 2 gezeigt.

Die Anordnung 2 weist wiederum das erste Kontaktelement 4, das im Wesentlichen rotationssymmetrisch ausgebildet ist. Das erste Kontaktelement 4 weist im gezeigten Beispiel eine zylinderförmige Außenfläche 8 auf, die zu dem ersten Anschluss 10 hin mit einem im Wesentlichen konstanten Durchmesser gebildet ist. Die Außenfläche 8 des ersten Kontaktelements 4 mit der Profilierung 22 versehen ist, die in Fig. 2 durch eine Vielzahl von entlang der Längsachse ausgebildeten Rillen angedeutet ist.

Das zweite Kontaktelement 14 ist ebenfalls im Wesentlichen rotationssymmetrisch ausgebildet, wobei an einem gegenüberliegendem Ende des zweiten Anschluss 16 der zylindrischer Hohlraum 18 gebildet ist, der um die Längsachse herum von der Innenfläche 20 begrenzt wird.

Die Dimensionierung der Innenfläche 20 und die Dimensionierung der Außenfläche 8 sind dabei so gewählt, dass das erste Kontaktelement 4 und das zweite Kontaktelement 14 bezüglich der korrespondierenden Außenfläche 8 und der Innenfläche 20 ineinandergreifen können, so dass eine elektrische Verbindung mittels Kaltverschweißen zwischen erstem Anschluss 10 und zweitem Anschluss 16 hergestellt werden kann. Der zweite Anschluss 16 ist im gezeigten Beispiel als hohlzylindrische Buchse ausgeführt, in deren Innerem ein elektrischer Leiter beispielsweise durch Löten oder Crimpen angebracht werden kann. Das zweite Kontaktelement 14 weist hier den umlaufenden Kragen 12 auf, der im Gegensatz zu den Ausführungsbeispielen nach Fig. 1A und 1B nicht als Anschlag beim Zusammenführen von erstem Anschluss 10 und zweitem Anschluss 16 dient sondern als Rückhalteelement bei der Einbettung des zweiten Kontaktelements 14 in eine isolierenden Kunststoffkörper (nicht in Fig. 2 gezeigt) herangezogen wird.

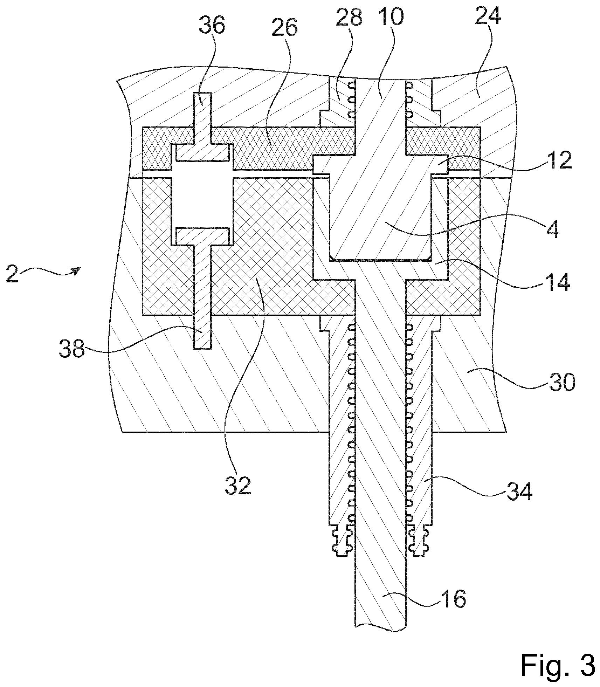

In Fig. 3 ist eine weitere Ausführungsform der erfindungsgemäßen Anordnung 2 gezeigt. Die Darstellung der Fig. 3 ist hier als Schnittansicht gewählt, wobei das erste Kontaktelement 4 in ein erstes Bauteil 24 eingesetzt ist. Dazu ist es vorgesehen, dass das erste Kontaktelement 4 im Bereich des Kragens 12 von einem ersten Isolator 26 begrenzt wird, der von dem ersten Anschluss 10 durchdrungen wird. Der erste Anschluss 10 kann von einer ebenfalls elektrisch isolierenden zylinderförmigen Dichtung 28 umschlossen sein. Bezüglich der Befestigung des zweiten Kontaktelements 14 wird eine ähnliche Vorgehensweise gewählt. Hier ist ein zweites Bauteil 30 an seiner Oberseite mit einem zweiten Isolator 32 versehen, der das von dem zweiten Anschluss 16 gegenüberliegende Ende des zweiten Kontaktelements 14 aufnimmt, so dass die korrespondierende Innenfläche 20 und Außenfläche 8 zusammengeführt werden können. Zwischen zweitem Bauteil 30 und zweitem Anschluss 16 ist wiederum eine zweite zylindrische Dichtung 34 angeordnet. Die Befestigung des ersten Isolators 26 im ersten Bauteil 24 kann beispielhaft mittels einer Schraube 36 erfolgen. Analog dazu erfolgt die Befestigung des zweiten Isolators 32 im zweiten Bauteil 30 mit einer zweiten Schraube 38. Hier ist es selbstverständlich möglich, auch andere, dem Fachmann bekannte Verbindungstechniken einzusetzen, wobei hier neben Schraubverbindungen auch ein Verkleben möglich wäre.

An der Darstellung gemäß Fig. 3 ist zu erkennen, dass mittels des ersten Kontaktelements 4 und des zweiten Kontaktelements 14 eine einfache elektrische und mechanische Verbindung zwischen dem ersten Bauteil 24 und dem zweiten Bauteil 30 geschaffen wird, wobei durch die Ausgestaltung des ersten Kontaktelements 4 mit einer zylindrischen Außenfläche 8 eine mechanisch stabile Aufnahme in den von der Innenfläche 20 begrenzten Hohlraum erfolgt, so dass die Montage der beiden Bauteile 24 und 30 zueinander zu einem relativ späten Fertigungszeitpunkt erfolgen kann.

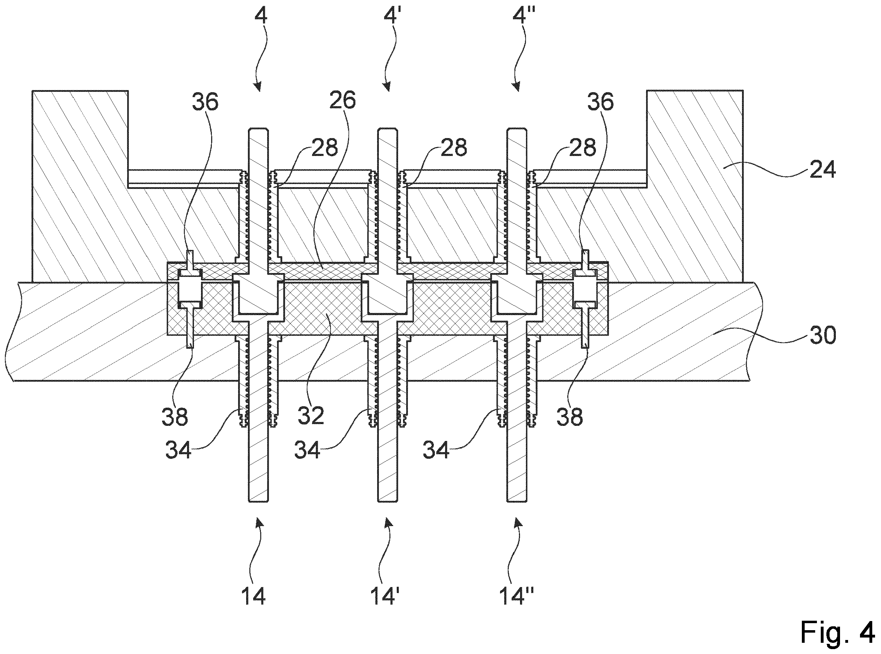

Das in Fig. 3 vorgestellte Konzept der elektrischen Verbindung zweier Bauteile wird nachfolgend unter Bezugnahme auf Fig. 4 auf mehrere elektrische Anschlüsse erweitert. Man erkennt, dass weitere erste Kontaktelemente 4' und 4" gebildet sind, die in korrespondierende zweite Kontaktelemente 14' und 14" eingreifen. Die restlichen Elemente sind identisch zur Darstellung auf Fig. 3 gewählt, so dass sinngemäß auf obige Ausführungen verwiesen wird. Aufgrund dieser Vorgehensweise lässt sich auf einfache Weise ein elektrischer Kontakt mehrerer Anschlüsse 10, 10' und 10" zu zweiten Anschlüssen 16, 16' und 16" durchführen, der darüber hinaus hohe Ströme aufnehmen kann und auch aufgrund der isolierenden Eigenschaften sowohl des Isolators 26 und 32 als auch der Dichtungen 34 und 28 für hohe Spannungen geeignet ist.

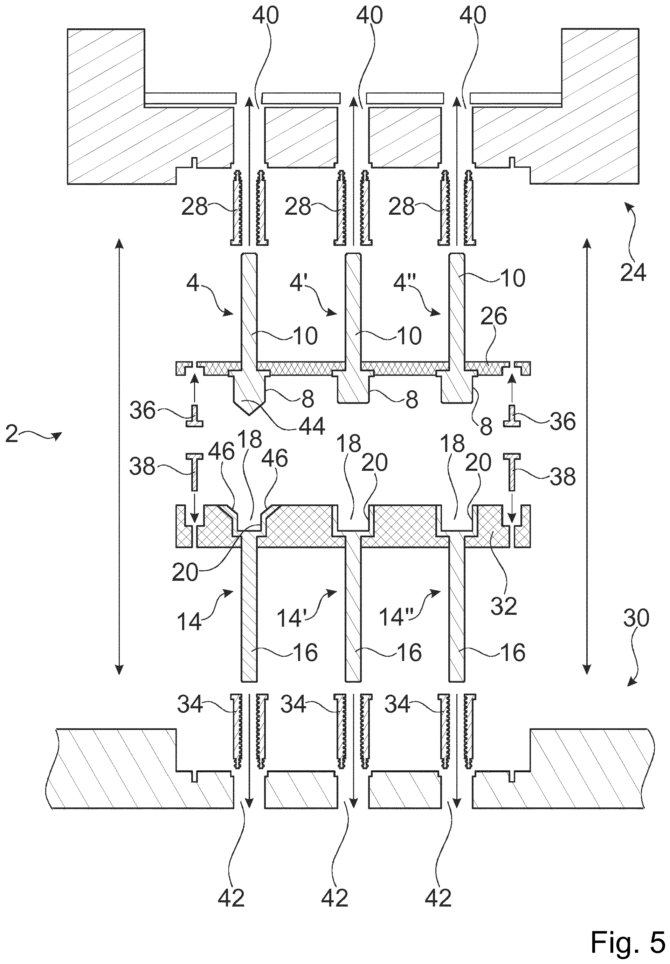

Unter Bezugnahme auf Fig. 5 wird nachfolgend der Zusammenbau der Anordnung 2 nochmals erläutert. Zunächst wird das erste Bauteil 24 bereitgestellt, in das an entsprechenden ersten Öffnungen 40 jeweils eine erste Dichtung 28 eingesetzt wird. Am ersten Isolator 26 wird nun für jede erste Öffnung 40 eine entsprechende Anzahl erster Kontaktelemente 4 eingesetzt, so dass anschließend der erste Isolator 26 mit den ersten Kontaktelementen 4 in die ersten Dichtungen 28 eingeführt werden kann und mittels der ersten Schrauben 38 im ersten Bauteil 24 fixiert wird. Die Befestigung der zweiten Kontaktelemente 14 im zweiten Isolator 32 erfolgt auf ähnliche Weise, wobei auch hier wiederum in entsprechende zweite Öffnungen 42 im zweiten Bauteil 30 jeweils zweite Dichtungen 34 eingesetzt werden, so dass ebenfalls die entsprechende Anzahl zweiter Kontaktelemente 14 in die zweiten Dichtungen 34 eingeführt wird und am zweiten Isolator 32 mittels der zweiten Schrauben 38 befestigt wird. Anschließend wird das erste Bauteil 24 mit dem zweiten Bauteil 30 zusammengeführt, so dass nun die Anordnung 2 gebildet wird, wie sie in Fig. 4 bereits dargestellt wurde. Aufgrund der kombinierten elektrischen und mechanischen Verbindung ist es möglich, elektrische Bauelemente beispielsweise an Aufladevorrichtungen zu einem sehr späten Zeitpunkt der Herstellungssequenz einzusetzen, so dass Elektronikkomponenten und mechanische Komponenten jeweils für sich herstellbar sind und als versiegelte Einheiten über die beiden Kontaktelemente 4 und 14 miteinander verbunden werden können.

In Fig. 5 ist bei dem am weitesten links befindlichen Paar aus dem ersten Kontaktelement 4 und zweiten Kontaktelement 14 zusätzliche Führungshilfen eingezeichnet, die den Zusammenbau des ersten Bauteils 24 mit dem zweiten Bauteil 30 erleichtern sollen. Dazu weist das erste Kontaktelement 4 an seiner Spitze zusätzlich einen Führungsstift 44. Desweiteren ist das zweite Kontaktelement 14 mit einer Führungsöffnung 46 versehen ist, um das Einführen der Kontaktelemente 4 und 14 ineinander zu erleichtern, indem der Führungsstift 44 in die korrespondierende Führungsöffnung 46 am anderen Kontaktelement eingreift. Der Führungsstift 44 und Führungsöffnung 46 sind dabei jeweils als Schrägflächen ausgebildet, so dass bei einer Abweichung der Lage eines der Kontaktelemente 4 und 14 von der Längsachse 6 eine Zentrierung hin zu der Längsachse 6 erfolgt.

Diese Maßnahme kann auch bei den anderen Ausführungsformen für einzelne oder alle Kontaktelemente 4 und 14 durchgeführt werden. Ebenso ist es möglich, lediglich den Führungsstift 44 oder Führungsöffnung 46 allein vorzusehen.

Besonders vorteilhaft hat es sich gezeigt, das im Zusammenhang mit den Fig. 1 bis 5 vorgestellte Konzept bei einer Aufladevorrichtung einzusetzen, bei der ein Verdichterrad mit einem Elektromotor angetrieben wird. Hierzu kann die Anordnung gemäß einer der Fig. 1 bis 5 sowohl zur Verbindung einzelner Komponenten der Leistungselektronik untereinander als auch zur Verbindung mit einem Elektromotor eingesetzt werden.

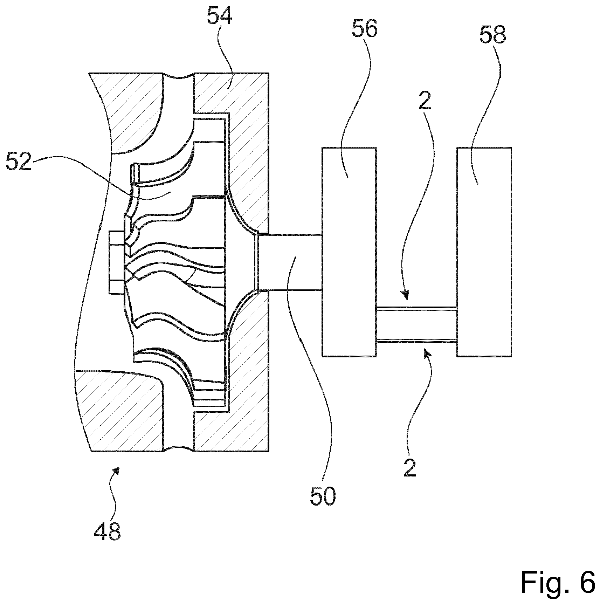

Dies wird in Zusammenhang mit Fig. 6 nochmals näher erläutert. In Fig. 6 ist eine Aufladevorrichtung 48 gezeigt, die lediglich schematisch in einer Schnittansicht dargestellt ist. Die Aufladevorrichtung 48 weist ein mit einer Welle 50 versehenes Verdichterrad 52 auf, das innerhalb eines Verdichtergehäuses 54 angeordnet ist. Die Welle 50 wird von einem Elektromotor 56 in Drehbewegung versetzt, wobei zur Ansteuerung des Elektromotors 56 eine Leistungselektronikschaltung 58 vorgesehen ist, die mittels der erfindungsgemäßen Anordnung 2 mit dem Elektromotor 56 verbunden ist. Alternativ oder zusätzlich kann die erfindungsgemäße Anordnung 2 auch im Inneren der Leistungselektronikschaltung 58 oder an anderen Stellen im Rahmen der Aufladevorrichtung 48 Verwendung finden.

Die Aufladevorrichtung 48 kann sowohl allein als auch in Kombination mit einem mechanischen Turbolader mit Turbinenrad und Verdichterrad im Ansaugtrakt einer Brennkraftmaschine eingesetzt werden, wobei in anderen Anwendungsfällen es ebenfalls möglich ist, die Aufladevorrichtung 48 beispielsweise zur Luftzuführung einer Brennstoffzelle einzusetzen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Anordnung
- 4: erstes Kontaktelement
- 6: Längsachse
- 8: Außenfläche
- 10: erster Anschluss
- 12: Kragen
- 14: zweites Kontaktelement
- 16: zweiter Anschluss
- 18: Hohlraum
- 20: Innenfläche
- 22: Profilierung
- 24: erstes Bauteil
- 26: erster Isolator
- 28: erste Dichtung
- 30: zweites Bauteil
- 32: zweiter Isolator
- 34: zweite Dichtung
- 36,38: erste, zweite Schraube
- 40,42: erste, zweite Öffnung
- 44: Führungsspitze
- 46: Führungsöffnung
- 48: Aufladevorrichtung
- 50: Welle
- 52: Verdichterrad
- 54: Verdichtergehäuse
- 56: Elektromotor
- 58: Leistungselektronik

## Patentansprüche

1. Anordnung zur elektrischen Verbindung zweier Bauteile, insbesondere einer Leistungselektronikschaltung (58) mit einem Elektromotor (56) einer Aufladevorrichtung (48), wobei ein erstes Bauteil (24) ein entlang einer Längsachse (6) ausgebildetes erstes Kontaktelement (4) aus einem leitfähigen Material aufweist, das mit einer die Längsachse (6) wenigstens teilweise umschließenden Außenfläche (8) ausgeführt ist, und ein zweites Bauteil (30) ein zweites Kontaktelement (14) aus einem leitfähigen Material aufweist, das mit einen entlang der Längsachse (6) ausgebildeten Hohlraum (18) ausgeführt ist, dessen Innenfläche (20) mit der Außenfläche (8) des ersten Kontaktelements (4) korrespondiert, wobei entweder die Innenfläche (20) des zweiten Kontaktelements (14) oder die Außenfläche (8) des ersten Kontaktelements (4) mit einer Profilierung (22) versehen ist, die eine Vielzahl vorspringender Elemente aufweist, wobei die Innenfläche (20) und die Außenfläche (8) bezüglich ihrer lateralen Abmessungen so gewählt sind, dass die vorspringenden Elemente der Profilierung (22) bei Einführen des ersten Kontaktelements (4) in das zweite Kontaktelement (14) in einem oberflächennahen Bereich in diesen eindringen.

2. Anordnung nach Anspruch 1, bei der die Profilierung (22) an der Außenfläche (8) des ersten Kontaktelements (4) angeordnet ist.

3. Anordnung nach Anspruch 2, bei der die vorspringenden Elemente der Profilierung (22) als regelmäßige Verzahnung ausgebildet sind.

4. Anordnung nach Anspruch 3, bei der die Verzahnung mittels eines Kaltwalzverfahrens erzeugt ist.

5. Anordnung nach einem der Ansprüche 1 bis 4, bei der das erste Kontaktelement (4) und das zweite Kontaktelement (14) mit einem entlang der Längsachse (6) symmetrischen Querschnitt, insbesondere einem zylindrischen oder rechteckförmigen Querschnitt gebildet sind.

6. Anordnung nach einem der Ansprüche 1 bis 5, bei der der oberflächennahe Bereich eine Oxidschicht auf der Oberfläche des Kontaktelements ist.

7. Anordnung nach einem der Ansprüche 1 bis 6, bei der zusätzlich ein Führungsstift (44) an einer Spitze des ersten Kontaktelements (4) oder des zweiten Kontaktelement (14) vorgesehen ist, um das Einführen der Kontaktelemente (4, 14) zu erleichtern, indem der Führungsstift (44) in eine korrespondierende Führungsöffnung (46) am anderen Kontaktelement eingreift.

8. Anordnung nach einem der Ansprüche 1 bis 7, bei der im ersten Bauteil (24) das erste Kontaktelement (4) in einem Isolator (26) angeordnet ist.

9. Anordnung nach einem der Ansprüche 1 bis 8, bei der im ersten Bauteil (24) mehrere erste Kontaktelemente (4, 4', 4") vorgesehen sind.

10. Anordnung nach einem der Ansprüche 1 bis 9, bei der im zweiten Bauteil (30) das zweite Kontaktelement (14) in einem Isolator (32) angeordnet ist.

11. Anordnung nach einem der Ansprüche 1 bis 10, bei der im zweiten Bauteil (30) mehrere zweite Kontaktelemente (14, 14', 14") vorgesehen sind.

12. Aufladevorrichtung, insbesondere in einem Fahrzeug, wobei die Aufladevorrichtung (48) aufweist:
- einen Verdichter mit einem Verdichtergehäuse (54) und einem Verdichterraum, in dem ein Verdichterrad (52) angeordnet ist,
- einen Elektromotor (56) mit einem Motorgehäuse, der über eine Welle (50) mit dem Verdichterrad (52) verbunden ist,
- eine Leistungselektronikschaltung (58) zur Ansteuerung des Elektromotors (56), die in einem Aufnahmeraum benachbart zum Motorgehäuse angeordnet ist, wobei zur elektrischen Verbindung an der Leistungselektronikschaltung (58) und/oder am Elektromotor (56) eine Anordnung (2) nach einem der Ansprüche 1 bis 11 vorgesehen ist.

13. Aufladevorrichtung nach Anspruch 12, bei der die Anordnung (2) zur elektrischen Verbindung innerhalb der Leistungselektronikschaltung (58) vorgesehen ist.

14. Aufladevorrichtung nach Anspruch 12, bei der die Anordnung (2) zur elektrischen Verbindung zwischen der Leistungselektronikschaltung (58) und dem Elektromotor (56) vorgesehen ist.

15. Aufladevorrichtung nach Anspruch 12 bis 14, die in einer Brennkraftmaschine oder einer Brennstoffzelle eingesetzt ist.
